# EUROPÄISCHE PATENTSCHRIFT

(11) **EP 3 218 618 B1**
(45) Veröffentlichungstag und Bekanntmachung des Hinweises auf die Patenterteilung: **24.06.2020**
(21) Anmeldenummer: 15775743.6
(22) Anmeldetag: 12.10.2015
(51) Int. Cl.: F16F 9/348

(54) **DÄMPFVENTIL FÜR EINEN SCHWINGUNGSDÄMPFER**
DAMING VALVE FOR VIBRATION DAMPER
VALVE D'AMORTISSEMENT POUR AMORTISSEUR DE VIBRATIONS

(30) Priorität: 12.11.2014 DE 102014223086
(43) Veröffentlichungstag der Anmeldung: 20.09.2017
(73) Patentinhaber: ZF Friedrichshafen AG, 88046 Friedrichshafen (DE)
(72) Erfinder: HOLTMANN, Guido, 51570 Windeck (DE); EICH, Achim, 53797 Lohmar (DE); HENRICHS, Jürgen, 57577 Hamm (DE); RÖSSELER, Jörg, 53809 Ruppichteroth (DE); KNEZEVIC, Aleksandar, 53783 Eitorf (DE)
(74) Vertreter: ZF Friedrichshafen AG
(86) Internationale Anmeldenummer: PCT/EP2015/073502
(87) Internationale Veröffentlichungsnummer: WO 2016/074870

(56) Entgegenhaltungen:
- DE-A1-102010 040 458
- DE-A1-102010 060 792
- US-A1- 2005 067 238

## Beschreibung

Die Erfindung betrifft ein Dämpfventil für einen Schwingungsdämpfer gemäß dem Oberbegriff von Patentanspruch 1.

Die DE 21 09 398 C3 beschreibt ein Dämpfventil für einen Schwingungsdämpfer. Das Dämpfventil umfasst einen Dämpfventilkörper mit einer Deckseite, die eine exzentrische kreisringförmige Ventilauflagefläche aufweist. In einem radialen Abstand ist eine innere kreisringförmige Ventilauflagefläche ausgeführt, die in derselben Ausrichtung exzentrisch orientiert ist. Dadurch ergibt sich ein exzentrischer Ringgraben mit konstanter radialer Breite. Eine den Ringgraben abdeckende zentrische Ventilscheibe weist somit einen über den Umfang unterschiedlichen Druckflächenradius auf. Dadurch wird ein definiertes Abhubverhalten der Ventilscheibe von der äußeren Ventilauflagefläche erreicht.

Die Konstruktion gemäß der DE 21 09 398 C3 weist den funktionalen Nachteil auf, dass die Form der ungleichmäßigen Breite der äußeren Ventilauflagefläche zu einem Klebeeffekt führt, der das Öffnungsverhalten nachhaltig negativ beeinflusst.

Die JP2958333 B2 beschreibt eine Ausführung, bei der zwei Ventilauflageflächen exzentrisch zu einander ausgeführt sind und ebenfalls einen Ringgraben begrenzen. Die Ventilauflageflächen weisen eine im Wesentlichen konstante radiale Breite. Eine Ventilscheibe mit konstantem Außendurchmesser weist bei einer derartigen Ventilausgestaltung über den Umfang einen unterschiedlichen radialen Überstand zur Ventilauflagefläche auf. Dadurch ergibt sich ein ungünstiger Druckangriffspunkt in Abhubrichtung auf die Ventilscheibe

Die DE 10 2010 060 792 A1 offenbart mit der Fig. 7 ein Dämpfventil mit einem Ringgraben zwischen einer inneren und einer äußeren Ventilsitzfläche. Die äußere Ventilsitzfläche verfügt über einen gekrümmten Verlauf mit verschiedenen Krümmungsradien, die Rücksprünge und damit eine Art Kleeblattdesign des Ringgrabens und damit der äußeren Ventilsitzfläche bilden. Ein im Prinzip ähnliches Design ist auch aus der DE 10 2010 040 458 A1 bekannt.

In der US 2005/067238 A1 verfügt das Dämpfventil ebenfalls über einen Ringgraben. Die äußere Ventilsitzfläche weist einen konstanten Durchmesser auf und die innere Ventilsitzfläche verfügt über eine profilierte Ventilsitzfläche, die in der Draufsicht einem Zahnrad ähnelt, also einer Aneinanderreihung von gleichartigen Rücksprüngen.

Die Aufgabe der vorliegenden Erfindung besteht darin, den aus dem Stand der Technik bekannten Nachteil des Klebeeffekts zu minimieren.

Die Aufgabe wird durch die Merkmale des Patentanspruchs 1 gelöst.

Durch den unterschiedlichen Krümmungsradius entsteht ein asymmetrischer Ringgraben und damit eine asymmetrische druckbeaufschlagte Fläche an der Ventilscheibe.

Der Vorteil besteht darin, dass trotz der asymmetrischen Ausgestaltung des Ringgrabens eine konstante Breite der Ventilauflagefläche beibehalten werden konnte. Durch die unterschiedlichen Krümmungsradien kann die zur Verfügung stehende Fläche einer Deckseite des Ventilkörpers deutlich besser ausgenutzt werden, d. h. ein größerer Ringgraben ist möglich, als bei einer kreisförmigen Geometrie.
Die Ei-Form folgt beispielsweise dieser Definition. Der Vorteil besteht darin, dass bei einem Dämpfventilkörper mit einem konstanten Außendurchmesser die Fläche einer Deckseite optimal ausgenutzt werden kann.

Bei einer Ausführungsform weist die äußere Ventilauflagefläche den unterschiedlichen Krümmungsradius auf. Der Flächenschwerpunkt des Ringgrabens verschiebt sich tendenziell sehr deutlich nach radial außen, so dass ein entsprechend großer Hebel für die auf die Ventilscheibe wirksame Druckkraft zur Verfügung steht.

Alternativ kann die innere Ventilauflagefläche den unterschiedlichen Krümmungsradius aufweisen.

Um eine Deformation der Ventilscheibe bei einer rückwärtigen Anströmung zu minimieren, weist der Ringgraben mindestens ein Stützsegment für eine Ventilscheibe auf. Um eine möglichst gleichmäßige Abstützung zu erreichen, weist das mindestens eine Stützsegment eine Bogenform auf.

Damit eine möglichst gute Anströmung der Ventilscheibe erreicht wird, ist im Bereich der größten Breite des Ringgrabens der Abstand des Stützsegments zur inneren Ventilauflagefläche kleiner als der Abstand zur äußeren Ventilauflagefläche

Um durch den Einsatz des mindestens einen Stützsegmentss keinen Verlust hinsichtlich der Größe der druckbeaufschlagten Fläche an der Ventilscheibe einbüßen zu müssen, weist das Stützsegment ausgehend vom Ringgraben eine geringere Höhe auf als die Ventilauflagefläche. Bei der Dimensionierung der Höhe werden die äußere und die innere Ventilauflagefläche über eine radiale Höhenlinie verbunden. Das Stützsegment weist dann einen geringfügigen Abstand zu der Höhenlinie auf. Besteht einen Höhenversatz zwischen der äußeren und inneren Ventilauflagefläche, dann kann der Fall eintragen, dass das Stützsegment geringfügig höher ist als eine der beiden Ventilauflageflächen.

Im Hinblick auf eine einfache Grundkonstruktion des Dämpfventils weist die mindestens eine Ventilscheibe einen konstanten Außendurchmesser auf. Eine in Umfangsrichtung orientierte Einbaulage entfällt damit.

Anhand der folgenden Figurenbeschreibung soll die Erfindung näher erläutert werden.

Es zeigt.
- Fig. 1: Einbausituation eines Dämpfventils
- Fig. 2: Explosionsdarstellung des Dämpfventils
- Fig. 3: Draufsicht des Dämpfventilkörpers nach Fig. 2

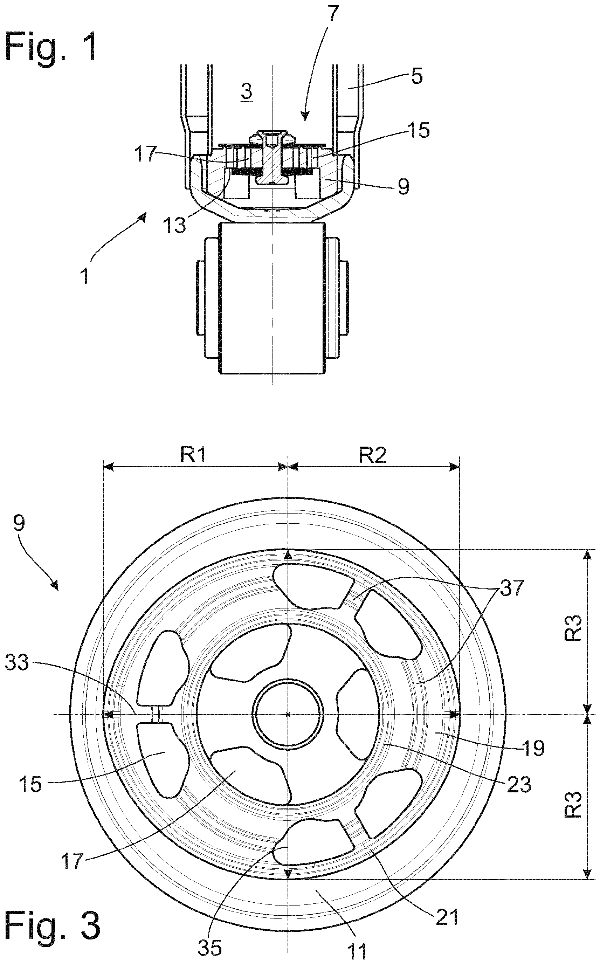

Die Fig. 1 zeigt beispielhaft einen Ausschnitt aus einem Schwingungsdämpfer 1 in der Bauform eines Zweirohrdämpfers, der zwischen einem mit Dämpfungsmedium gefüllten Arbeitsraum 3 und einem Ausgleichsraum 5 ein Dämpfventil 7 aufweist. Grundsätzlich kann das Dämpfventil 7 auch an einer Kolbenstange oder als Vorventil zu einem verstellbaren Dämpfventil angewendet werden. Die Anwendungsmöglichkeiten sind weder auf die zeichnerische Darstellung noch auf die vorstehend genannten Fälle beschränkt.

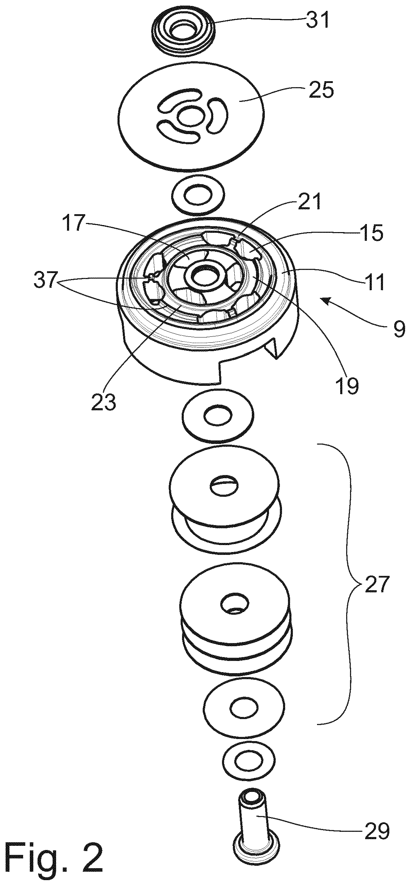

Das Dämpfventil 7 verfügt, wie in der Zusammenschau mit der Fig. 2 noch deutlicher wird, über einen Dämpfventilkörper 9, der zwei Deckseiten 11, 13 aufweist. Mindestens ein Durchlasskanal 15, 17 verbindet die beiden Deckseiten 11, 13. In dem vorliegenden Ausführungsbeispiel stehen für eine erste Durchströmungsrichtung ausgehend vom Ausgleichsraum in die Arbeitskammer 3 Durchlasskanäle 15 und für eine Durchströmung ausgehend von der Arbeitskammer 3 in den Ausgleichsraum 5 Durchlasskanäle 17 zur Verfügung. Die Anzahl, die Form und die Größe der Durchlasskanäle sind u. a. abhängig vom Durchmesser des Dämpfventilkörpers 9. Anstatt der nutförmigen Querschnitte der Durchlasskanäle können auch einfache Kreisquerschnitte oder Kombinationen aus Nut- und Kreisformen gewählt werden.

Austrittsöffnungen der Durchlasskanäle 15 münden in einem Ringgraben 19, der von einer äußeren und einer inneren Ventilauflagefläche 21, 23 begrenzt. Auf dieser Ventilauflagefläche ist mindestens eine Ventilscheibe 25 aufgelegt. Auch die Austrittsöffnungen der Durchlasskanäle 17 werden von Ventilscheiben 27 abgedeckt. Der gesamte Verband aus Ventilscheiben 25, 27 und Dämpfventilkörper 9 wird von einem Bolzen 29 mit einem Schließring 31 mit einer definierten Vorspannung zusammengehalten. Die Bestückung des Dämpfventilkörpers mit Ventilscheiben ist abhängig von einer angestrebten Dämpfkraftkennlinie, so dass diese Darstellung ebenfalls nur beispielhaft zu verstehen ist.

Die Fig. 3 zeigt den Dämpfventilkörper 9 in der Draufsicht. Wie man nun besser erkennt, sind die Durchlasskanäle 15, 17 für jeweils eine Durchströmungsrichtung auf einem gemeinsamen Teilkreis angeordnet. Diese Anordnung ist nicht zwingend erforderlich. Die Ventilauflageflächen 21, 23 haben im Rahmen der Fertigungstoleranzen eine konstante Breite. Folglich liegen über den Umfang der Ventilauflageflächen betrachtet im Wesentlichen konstante Klebekräfte zwischen der Ventilscheibe 25 und den Ventilauflageflächen 21, 23 vor.

Es ist deutlich erkennbar, dass der Ringgraben 19 über den Umfang betrachtet eine unterschiedliche Breite aufweist und damit bezogen auf den Mittelpunkt des Dämpfventilkörpers 9 asymmetrisch ausgeführt ist, da mindestens eine Ventilauflagefläche 21, 23 über den Umfang einen unterschiedlichen Krümmungsradius aufweist. In dieser bildlichen Darstellung weist über den Umfang die äußere Ventilauflagefläche 21 den unterschiedlichen Krümmungsradius auf. Grundsätzlich könnte auch die innere Ventilauflagefläche den unterschiedlichen Krümmungsradius aufweisen. Auch eine Kombination beider Ventilauflageflächenverläufe wäre denkbar und sinnvoll.

In dem Beispiel nach Fig. 3 verfügt der Krümmungsradius der äußeren Ventilauflagefläche über ein Maximum und ein Minium. Der Abstand zwischen den beiden Extremwerden beträgt weniger als 180°. Bezogen auf eine Hauptachse 33 ist die äußere Ventilauflagefläche 21 symmetrisch ausgeführt. Ausgehend von einem Mittelpunkt des Ventilkörpers ist die Hauptachse 33 für die äußere Ventilauflagefläche R1 + R2 lang. R1 ist größer als R2. Die Länge der Normalen 35 zur Hauptachse 33 beträgt = zweimal R3 und ist kürzer als die Hauptachse 33. Die äußere Ventilauflagefläche weist keine radialen Rücksprünge auf, sodass sich dadurch eine Ei-förmige Geometrie der Ventilauslagefläche ergibt. Konstruieren lässt sich die Geometrie, indem man um den Mittelpunkt einen Bogen mit dem Radius R1/2 und gegenüberliegend einen Bogen mit dem Radius R1/2 schlägt. Diese beiden Bögen werden tangential über einen Verbindungsbogen miteinander verbunden, der einen Abstand 2 x R3 zum Mittelpunkt aufweist.

Bei einer Anströmung ausgehend vom Arbeitsraum 3 ist die Ventilscheibe 25 einer Biegebelastung ausgesetzt. Damit die Durchbiegung der Ventilscheibe 25 insbesondere im Bereich der größten Breite des Ringgrabens 19 begrenzt wird, verfügt der Dämpfventilkörper 9 im Ringgraben 19 über mindestens ein Stützsegment 37 für die Ventilscheibe 25. Bevorzugt weist das mindestens eine Stützsegment 37 eine Bogenform aus. Dabei ist der Abstand des Stützsegments 33 zum Mittelpunkt des Dämpfventilkörpers 9 im Rahmen der Fertigungstoleranz konstant, d. h. dass im Bereich der größten Breite des Ringgrabens 17 der Abstand des Stützsegments 37 zur inneren Ventilauflagefläche 23 kleiner ist als der Abstand zur äußeren Ventilauflagefläche 21. Dadurch teilt das Stützsegment 37 den Ringgraben 17 in zwei Umfangsbereich mit unterschiedlicher Breite, wobei der Bereich mit der größeren Breite radial außerhalb zum Stützsegment 37 verläuft. Die Stützsegmente 37 werden durch die Austrittsöffnungen der Durchlasskanäle 15 getrennt.

Grundsätzlich bilden die Stützsegmente 37 keine Ventilauflagefläche vergleichbar mit der inneren oder äußeren Ventilauflagefläche 21, 23, da die Stirnseite der Stützsegmente 37 ausgehend von Ringgraben 17 eine geringere Höhe aufweist als die Ventilauflageflächen 21, 23. Dadurch verbleibt bei einer Anströmung der Ventilscheibe 25 ausgehend vom Ringgraben 17 ein geringfügiger Spalt, in den das Dämpfmedium eintreten kann und somit der gesamte Bereich zwischen der inneren und der äußeren Ventilauflagefläche 21, 23 als druckbeaufschlagte Fläche an der Ventilscheibe 25 zur Verfügung steht.

Die verwendete Ventilscheibe 25 weist einen konstanten Außendurchmesser auf. Bedingt durch den vergleichsweise kleinen maßlichen Unterschied zwischen R1, R2 und R3 ergibt sich nur ein geringfügiger radialer Überstand der Ventilscheibe zur äußeren Ventilauflagefläche 21, insbesondere im Bereich R1.

Bei einer Anströmung des Dämpfventils 7 aus dem Ausgleichsraum 5 liegt ein Druckangriffspunkt im Bereich von R1 geringfügig weiter radial außen als über den weiteren Umfangsbereich des Ringgrabens. Damit ist auch der auf die Ventilscheibe 25 wirksame Hebelarm entsprechend dem Abstand zum Mittelpunkt der Ventilscheibe 25 an der besagten Stelle am größten. Folglich hebt die Ventilscheibe definiert im Bereich von R1 zuerst ab und dann beidseitig fortsetzend ohne Kraftsprünge.

### Bezugszeichen

- 1: Schwingungsdämpfer
- 3: Arbeitsraum
- 5: Ausgleichsraum
- 7: Dämpfventil
- 9: Dämpfventilkörper
- 11: Deckseite
- 13: Deckseite
- 15: Durchlasskanal
- 17: Durchlasskanal
- 19: Ringgraben
- 21: äußere Ventilauflagefläche
- 23: innere Ventilauflagefläche
- 25: Ventilscheibe
- 27: Ventilscheibe
- 29: Bolzen
- 31: Schließring
- 33: Hauptachse
- 35: Normale
- 37: Stützsegment

## Patentansprüche

1. Dämpfventil (7), umfassend einen Dämpfventilkörper (9) mit mindestens einem Durchlasskanal (15; 17) zwischen zwei Deckseiten (11; 13), wobei eine Austrittsöffnung des Durchlasskanals (15; 17) in einem deckseitigen Ringgraben (19) mündet, der von einer äußeren ringförmigen und von einer inneren ringförmigen Ventilauflagefläche (21; 23) begrenzt wird, die mindestens eine ringförmige Ventilauflagefläche (21; 23) für mindestens eine Ventilscheibe (25) über den Umfang eine im wesentlichen konstante Breite aufweist und der Ringgraben (19) über den Umfang eine unterschiedliche Breite aufweist, wobei mindestens eine Ventilauflagefläche (21; 23) über den Umfang einen unterschiedlichen Krümmungsradius (R1; R2; R3) aufweist, **dadurch gekennzeichnet, dass** die Ventilauflagefläche (21; 23) eine rücksprungsfreie Reihenanordnung von Krümmungsradien aufweist, die eine Ei-förmige Geometrie der Ventilauflagefläche ergibt, wobei die Krümmungsradien (R1; R2; R3) ein Minimum R3 und ein Maximum R1 aufweisen und damit der Krümmungsradius R1 größer ist als ein Krümmungsradius R2, wobei die beiden Extremwerte der Radien (R1; R3) einen Abstand von weniger als 180° über den Umfang der Ventilauflagefläche (21; 23) aufweisen, wobei ausgehend von dem Mittelpunkt des Ventilkörpers eine Hauptachse (33) der Ventilauflagefläche (21; 23) eine Länge aufweist, die der Summe der Krümmungsradien R1 und R2 entspricht und eine zur Hauptachse (33) verlaufende Normale (35) aufweist, mit einer Länge entsprechend dem Doppelten des kleinsten Radius R3 (2 x R3), diekürzer ist als die der Hauptachse (33), wobei die Ventilauflagefläche (21) bezogen auf die Hauptachse (33) symmetrisch ausgeführt ist.

2. Dämpfventil nach Anspruch 1, **dadurch gekennzeichnet, dass** die äußere Ventilauflagefläche (21) den unterschiedlichen Krümmungsradius (R1; R2; R3) aufweist.

3. Dämpfventil nach Anspruch 1, **dadurch gekennzeichnet, dass** die innere Ventilauflagefläche (23) den unterschiedlichen Krümmungsradius (R1; R2; R3) aufweist.

4. Dämpfventil nach Anspruch 1, **dadurch gekennzeichnet, dass** der Ringgraben (19) mindestens ein Stützsegment (37) für eine Ventilscheibe (25) aufweist.

5. Dämpfventil nach Anspruch 4, **dadurch gekennzeichnet, dass** das mindestens eine Stützsegment (37) eine Bogenform aufweist.

6. Dämpfventil nach Anspruch 4, **dadurch gekennzeichnet, dass** im Bereich der größten Breite des Ringgrabens (19) der Abstand des Stützsegments (37) zur inneren Ventilauflagefläche (23) kleiner ist als der Abstand zur äußeren Ventilauflagefläche (21).

7. Dämpfventil nach Anspruch 4, **dadurch gekennzeichnet, dass** Stützsegment (37) ausgehend von Ringgraben (19) eine geringere Höhe aufweist als die Ventilauflagefläche (21; 23).

8. Dämpfventil nach Anspruch 1 - 7, **dadurch gekennzeichnet, dass** die Ventilscheibe (25) einen konstanten Außendurchmesser aufweist.

## Claims

1. Damping valve (7) comprising a damping valve body (9) having at least one passage duct (15; 17) between two cover sides (11; 13), wherein an exit opening of the passage duct (15; 17) opens into a cover-side ring-shaped depression (19) which is delimited by an outer ring-shaped, and by an inner ring-shaped, valve bearing surface (21; 23), at least one ring-shaped valve bearing surface (21; 23) for at least one valve disc (25) having a substantially constant width over the circumference, and the ring-shaped depression (19) having a varying width over the circumference, wherein at least one valve bearing surface (21; 23) has a varying radius of curvature (Rl; R2; R3) over the circumference, **characterized in that** the valve bearing surface (21; 23) has a recess-free sequential arrangement of radii of curvature which yields an ovoid geometry of the valve bearing surface, wherein the radii of curvature (Rl; R2; R3) have a minimum R3 and a maximum R1 and the radius of curvature R1 is thus greater than a radius of curvature R2, wherein the two extreme values of the radii (Rl; R3) have a spacing of less than 180° over the circumference of the valve bearing surface (21; 23), wherein, based on the central point of the valve body, a main axis (33) of the valve bearing surface (21; 23) has a length which corresponds to the sum of the radii of curvature R1 and R2 and has a normal (35) with respect to the main axis (33) that has a length corresponding to twice the smallest radius R3 (2 x R3), this being shorter than the main axis (33), wherein, in relation to the main axis (33), the valve bearing surface (21) is of symmetrical form.

2. Damping valve according to Claim 1, **characterized in that** the outer valve bearing surface (21) has the varying radius of curvature (Rl; R2; R3).

3. Damping valve according to Claim 1, **characterized in that** the inner valve bearing surface (23) has the varying radius of curvature (Rl; R2; R3).

4. Damping valve according to Claim 1, **characterized in that** the ring-shaped depression (19) has at least one support segment (37) for a valve disc (25).

5. Damping valve according to Claim 4, **characterized in that** the at least one support segment (37) has an arcuate shape.

6. Damping valve according to Claim 4, **characterized in that**, in the region of the greatest width of the ring-shaped depression (19), the spacing of the support segment (37) to the inner valve bearing surface (23) is smaller than the spacing to the outer valve bearing surface (21).

7. Damping valve according to Claim 4, **characterized in that**, based on the ring-shaped depression (19), the support segment (37) has a smaller height than the valve support surface (21; 23).

8. Damping valve according to Claims 1-7, **characterized in that** the valve disc (25) has a constant outer diameter.

## Revendications

1. Soupape d'amortissement (7), comprenant un corps de soupape d'amortissement (9) avec au moins un canal de passage (15 ; 17) entre deux côtés de recouvrement (11 ; 13), une ouverture de sortie du canal de passage (15 ; 17) débouchant dans une gorge annulaire (19) du côté du recouvrement, laquelle est limitée par une surface d'appui de soupape annulaire extérieure et une surface d'appui de soupape annulaire intérieure (21 ; 23), l'au moins une surface d'appui de soupape annulaire (21 ; 23) pour au moins un disque de soupape (25) présentant sur la périphérie une largeur essentiellement constante et la gorge annulaire (19) présentant sur la périphérie une largeur différente, au moins une surface d'appui de soupape (21 ; 23) présentant sur la périphérie un rayon de courbure différent (R1 ; R2 ; R3), **caractérisée en ce que** la surface d'appui de soupape (21 ; 23) présente un agencement en série sans saut de rayons de courbure qui produit une géométrie en forme d'œuf de la surface d'appui de soupape, les rayons de courbure (R1 ; R2 ; R3) présentant un minimum R3 et un maximum R1 et par conséquent le rayon de courbure R1 étant supérieur à un rayon de courbure R2, les deux valeurs extrêmes des rayons (R1 ; R3) présentant un espacement inférieur à 180° sur la périphérie de la surface d'appui de soupape (21 ; 23), un axe principal (33) de la surface d'appui de soupape (21 ; 23) présentant, à partir du centre du corps de soupape, une longueur qui correspond à la somme des rayons de courbure R1 et R2 et présente une normale (35) à l'axe principal (33) avec une longueur correspondant au double du plus petit rayon R3 (2 x R3), qui est plus courte que la longueur de l'axe principal (33), la surface d'appui de soupape (21) étant réalisée de manière symétrique par rapport à l'axe principal (33).

2. Soupape d'amortissement selon la revendication 1, **caractérisée en ce que** la surface d'appui de soupape extérieure (21) présente le rayon de courbure différent (R1 ; R2 ; R3).

3. Soupape d'amortissement selon la revendication 1, **caractérisée en ce que** la surface d'appui de soupape intérieure (23) présente le rayon de courbure différent (R1 ; R2 ; R3).

4. Soupape d'amortissement selon la revendication 1, **caractérisée en ce que** la gorge annulaire (19) présente au moins un segment de support (37) pour un disque de soupape (25).

5. Soupape d'amortissement selon la revendication 4, **caractérisée en ce que** l'au moins un élément de support (37) présente une forme en arc.

6. Soupape d'amortissement selon la revendication 4, **caractérisée en ce que**, dans la région de la plus grande largeur de la gorge annulaire (19), la distance du segment de support (37) à la surface d'appui de soupape intérieure (23) est inférieure à la distance à la surface d'appui de soupape extérieure (21).

7. Soupape d'amortissement selon la revendication 4, **caractérisée en ce que** le segment de support (37) présente, à partir de la gorge annulaire (19), une plus faible hauteur que la surface d'appui de soupape (21 ; 23).

8. Soupape d'amortissement selon les revendications 1 à 7, **caractérisée en ce que** le disque de soupape (25) présente un diamètre extérieur constant.
